# EUROPEAN PATENT SPECIFICATION

(11) **EP 1 764 271 B1**
(45) Date of publication and mention of the grant of the patent: **25.08.2010**
(21) Application number: 06018970.1
(22) Date of filing: 11.09.2006
(51) Int. Cl.: B60R 21/213, B60R 21/231

(54) **Mounting component and mounting structure for curtain airbag**
Befestigungsbeschlag und Befestigungsstruktur für Vorhang-Airbageinrichtung
Pièce de montage et structure de montage pour coussin gonflable en forme de rideau

(30) Priority: 20.09.2005 JP 2005272607
(43) Date of publication of application: 21.03.2007
(73) Proprietor: TAKATA CORPORATION, Minato-ku, Tokyo 106-8510 (JP)
(72) Inventor: Minamikawa, Takeki, Tokyo 106-8510 (JP)
(74) Representative: Vossius & Partner

(56) References cited:
- EP-A- 1 112 900
- WO-A-02/28690
- JP-A- 2000 247 203
- JP-A- 2002 053 003
- US-A1- 2005 046 154

## Description

The present invention relates to mounting components for mounting curtain airbags on, for example, roof side rails of vehicle bodies, and relates to mounting structures for curtain airbags using the mounting components.

Known technologies for mounting curtain airbags on vehicle bodies using mounting components are disclosed in JP-A-2002-53003 (Patent Document 1) and JP-A-2002-53005 (Patent Document 2).

In these known technologies, folded curtain airbags are disposed along bottom portions of inverted T-shaped (chevron-shaped) mounting components and bound to the mounting components with pieces of tape. The mounting components are attached to roof side rails using bolts.

According to the mounting components and structures disclosed in JP-A-2002-53003 and JP-A-2002-53005, the lower sides of the folded curtain airbags having the mounting component attached thereto may be pushed upward or toward the vehicle cabin as a result of striking vehicle members such as B-pillar garnishes during mounting of the folded curtain airbags on the roof side rails, and the mounting components may be hidden behind the folded curtain airbags. In such cases, the mounting components are difficult to attach to the roof side rail.

US 2005/046154 A1 relates to a mounting bracket that may be used to attach an inflatable curtain airbag having a manifold to an interior vehicle surface. The side curtain airbag is attached to an inflator that provides in-flation gas to the airbag during an accident. The curtain airbag is secured to the vehicle to ensure that the curtain airbag main-tains a preferred position and orientation during deployment as well as during the normal operation of the vehicle. Thus, one or more mounting brackets are added to mount the curtain airbag to the vehicle. The mounting brackets generally comprise two sections or components, namely a base bracket and a retaining clip. The retaining clip is attachable to the base bracket which, in turn, contacts and/or is affixed to the vehicle interior. The mounting bracket is constructed such that when the retaining clip is attached to the base bracket, the manifold is held between the retaining clip and the base bracket.

An object of the present invention is to provide a mounting component for a curtain airbag capable of preventing a folded curtain airbag from hiding the mounting component even when the folded curtain airbag strikes a B-pillar garnish or the like and thus facilitating efficient mounting of the folded curtain airbag, and to provide a mounting structure for a curtain airbag using this mounting component. This object is achieved with the features of the claims.

According to the mounting components and structures of the present invention, the upward movement of the folded curtain airbag caused by the folded curtain airbag striking a vehicle member such as a B-pillar garnish can be blocked by the projecting pieces. Therefore, the mounting component is not hidden behind the folded curtain airbag, and the mounting component can be easily attached to the vehicle body.

Since the projecting pieces are disposed at both ends of the base piece, the folded curtain airbag is sufficiently prevented from hiding the mounting component even when the folded curtain airbag is pushed upward at a position remote from the base piece.

When each of the projecting pieces has the hanging portion at the end thereof as claimed in Claim 2, the folded curtain airbag is blocked from rotating upward from a position adjacent to the vehicle cabin.

When the projecting pieces are concaved downward as claimed in Claim 3 and the pieces of tape are wound so as to surround the outer peripheries of the projecting pieces as claimed in Claim 8, the movement of the folded curtain airbag can be sufficiently blocked. Also, the pieces of tape are not in contact with angular portions, resulting in improved durability.

When the length of the projecting pieces in the front-back direction of the vehicle body is large as claimed in Claim 4, the movement of the folded curtain airbag can be blocked more effectively. When the catching piece is engaged with the catching hole of the vehicle body as claimed in Claim 5, the rotation of the mounting component can be blocked more effectively.

When the tab is interposed between the retaining piece and the base piece as claimed in Claim 7, the tab is prevented from warping during mounting of the curtain airbag. Thus, the mounting work efficiency is improved.

Embodiments will now be described with reference to the drawings.

Fig. 1(a) is a perspective view of a mounting component for a curtain airbag according to an embodiment, and Fig. 1(b) is an exploded perspective view illustrating a mounting structure attached to a vehicle body;
Fig. 2(a) is a perspective view of a mounting component according to another embodiment, and Fig. 2(b) is an exploded perspective view illustrating a mounting structure for a curtain airbag using this mounting component;
Fig. 3(a) is a perspective view of a mounting component for a curtain airbag according to yet another embodiment, and Fig. 3(b) is a perspective view illustrating a folded curtain airbag having the mounting component attached thereto; and
Fig. 4 is a perspective view of the folded curtain airbag with the mounting component.

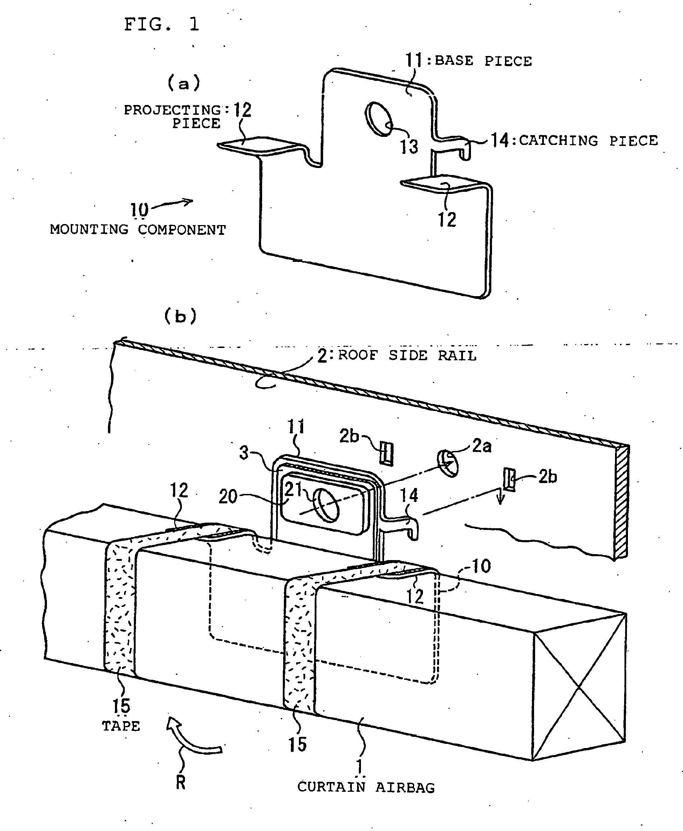

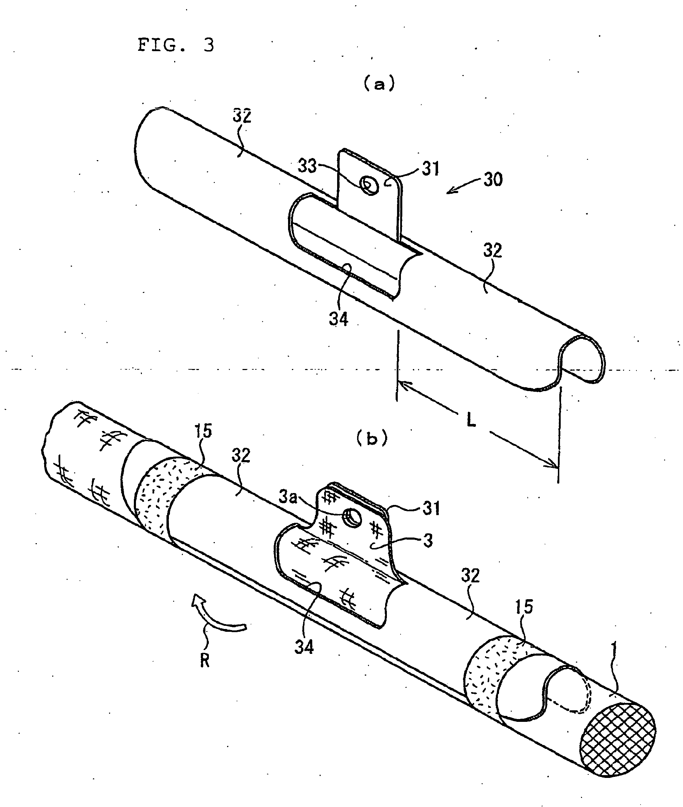

In the embodiment of Figs. 1(a) and 1(b), a curtain airbag 1 of an automobile for restraining heads of occupants is mounted on a roof side rail 2 of a vehicle body of the automobile. This curtain airbag 1 is formed of two layered sheets connected to each other at the peripheries thereof using sewing threads, bonding agents, or the like so as to form a pouched shape. Tabs 3 protrude upward from the upper end of the curtain airbag 1. The tabs 3 each have an opening (an opening 3a shown in Fig. 3(b); described below) for fixing the curtain airbag 1 to the roof side rail 2. The tabs 3 are attached to the roof side rail 2 via mounting components 10.

At this time, the curtain airbag 1 is folded in a compact manner so as to be disposed along the roof side rail 2. The folded curtain airbag 1 is fitted into a tubular cover (not shown) composed of, for example, a non-woven fabric, and is retained inside the cover. The cover has a plurality of windows such that the tabs 3 are exposed to the exterior of the cover via the windows.

The mounting components 10 each include a base piece 11 superposed on the roof side rail 2, and projecting pieces 12 extending from the base piece over the folded curtain airbag 1 at both ends of the base piece 11 in the front-back direction of the vehicle. In this embodiment, the base piece 11 has at the upper portion thereof a through-hole 13 for a bolt or a screw. Moreover, the base piece 11 has catching pieces 14 protruding from the upper portion of both sides of the base pieces 11 toward the roof side rail 2. The catching pieces 14 are of an L shape and the ends thereof are bent downward.

The lower portion of the base piece 11 extends in the front-back direction of the vehicle, and the projecting pieces 12 protrude from the upper sides of the extended portions toward the vehicle cabin so as to be away from the roof side rail 2. In this embodiment, the base piece 11, the projecting pieces 12, and the catching pieces 14 are formed by bending a flat plate. The length of the projecting pieces 12 is smaller than or substantially equal to the width of the folded curtain airbag 1 so as to control the movement of the folded curtain airbag 1 that is made to spring upward as described below.

The folded curtain airbag 1 is disposed in front of the base pieces 11 and under the projecting pieces 12 of the mounting components 10. At this time, the tabs 3 of the curtain airbag 1 are superposed on the base pieces 11.

Pieces of tape 15 are wound around the mounting components 10 and the folded curtain airbag so as to surround the mounting components 10 and the folded curtain airbag, thereby integrating the mounting components 10 and the folded curtain airbag 1. The pieces of tape 15 are wound around the outer periphery of the projecting pieces 12. The width of the pieces of tape 15 is, for example, about 10 mm, and the width of the projecting pieces 12 is set to be larger than or equal to the width of the pieces of tape 15. The pieces of tape 15 are ruptured during the expansion of the curtain airbag 1.

In this embodiment, a retaining piece 20 is superposed on each of the tabs 3 such that tabs 3 are held between the retaining pieces 20 and the base pieces 11. Each of the retaining pieces 20 has a short cylindrical portion 21 that is fitted into the through-hole 13 of the corresponding base piece 11 via the opening of the corresponding tab 3. The cylindrical portions 21 are fixed to the edges of the through-holes 13 by riveting. The base pieces 11, the tabs 3, and the retaining pieces 20 may be fixed by means of bonding or the like instead of the above-described riveting. The retaining pieces 20 can be omitted, and only the base pieces 11 and the tabs 3 may be used.

The roof side rail 2 has holes 2a that face the through-holes 13 and slots 2b that face the catching pieces 14.

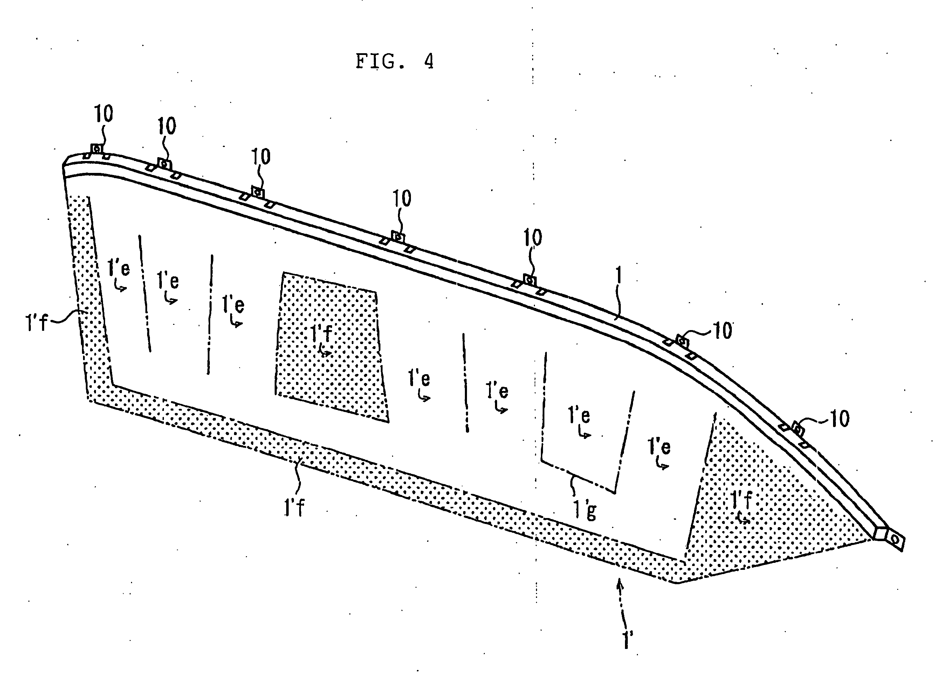

The folded curtain airbag 1 having the mounting components 10 integrated therewith as described above is disposed along the roof side rail 2, and the catching pieces 14 are inserted into and hooked on the slots 2b. Thus, each of the through-holes 13 and the corresponding cylindrical portion 21 become coaxial with the corresponding hole 2a. Then, bolts or screws (not shown) are screwed into the holes 2a via the cylindrical portions 21 such that the curtain airbag 1 is mounted on the roof side rail 2. As shown in Fig. 4, the mounting components 10 are not necessarily attached to the B-pillar garnish, but may be attached at any positions in the above-described manner. A curtain airbag 1' shown in Fig. 4 is inflated, and has expanded portions 1'e, non-expanded portions 1'f, and a non-expanded portion 1'g provided by means of seams. An inflator (not shown) may be connected to an end of the curtain airbag 1, or at a predetermined position in the longitudinal direction of the curtain airbag 1.

When the folded curtain airbag 1 is made to spring upward in a direction of an arrow R shown in Fig. 1(b) as a result of striking a vehicle member such as the B-pillar garnish during mounting, the movement of the folded curtain airbag 1 is blocked by the projecting pieces 12 extending over the folded curtain airbag 1 and the pieces of tape 15. Therefore, the mounting components 10 are not hidden behind the folded curtain airbag 1, and can be efficiently attached to the roof side rail 2. In particular, the upward movement of the folded curtain airbag 1 can be regulated more effectively by the projecting pieces 12 disposed at both ends of the corresponding through-holes 13 as described above.

In this embodiment, the mounting components 10 can be temporarily fixed to the roof side rail 2 by the catching pieces 14, and thus the attachment using bolts or screws is facilitated. Moreover, corotation of the mounting components 10 during screwing of the bolts or screws can be prevented by the engagement of the catching pieces 14 with the slots 2b.

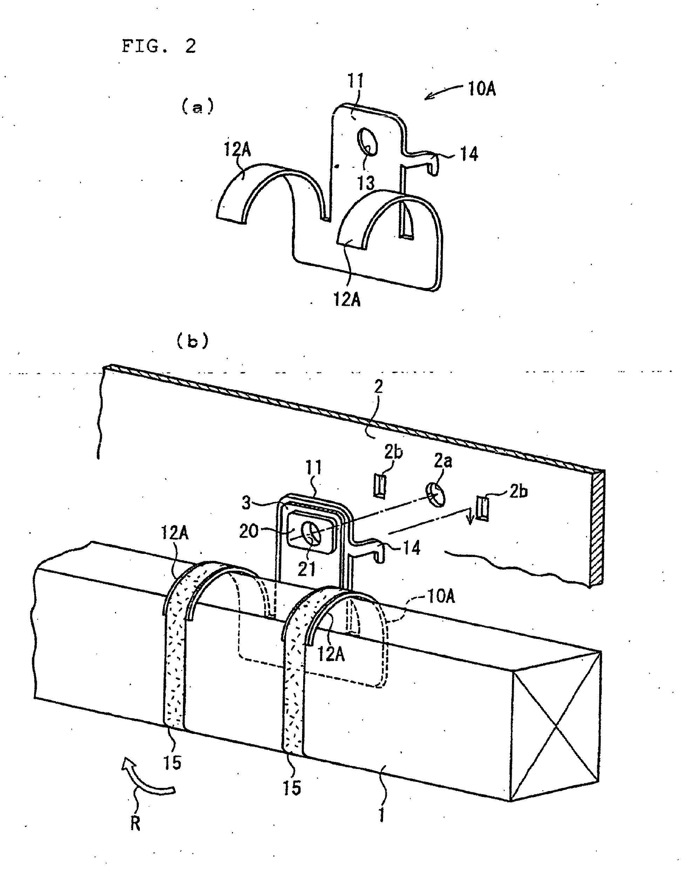

Fig. 2(a) is a perspective view of a mounting component according to another embodiment, and Fig. 2(b) is an exploded perspective view illustrating a mounting structure for a curtain airbag using this mounting component.

Mounting components 10A have the same structure as the mounting components 10 except that projecting pieces 12A are of appropriately semicylindrical shapes curving downward. The curved portions of the projecting pieces 12A having a radius of curvature of, for example, 13 to 15 mm, cover a folded curtain airbag 1 in the width direction thereof. The folded curtain airbag 1 is of an appropriately cylindrical shape since the folded curtain airbag 1 is fitted into a tubular cover as described above. Accordingly, the projecting pieces 12A are preferably disposed so as to fit to the upper portion of the approximately cylindrical folded curtain airbag.

These mounting components 10A are integrated with the folded curtain airbag 1 as in the above-described embodiment.

In this embodiment, the end of the projecting pieces 12A extend from the upper surface of the folded curtain airbag to the upper portion of the folded curtain airbag adjacent to the vehicle cabin, and thus can block the movement of the folded curtain airbag in the direction of the arrow R to a greater extent. Pieces of tape 15 are wound around these projecting pieces 12A. Since the projecting pieces 12A have no angular portions, the durability of the pieces of tape 15 can be enhanced.

Other structures shown in Figs. 2(a) and 2(b) are the same as in those shown in Figs. 1(a) and 1(b), and the same reference numerals correspond to the same components.

Fig. 3(a) is a perspective view of a mounting component for a curtain airbag according to yet another embodiment, and Fig. 3(b) is a perspective view illustrating a folded curtain airbag having the mounting component attached thereto.

Mounting components 30 according to this embodiment each include a base piece 31 superposed on a surface of a roof side rail 2 (not shown in Figs. 3(a) and 3(b)) adjacent to the vehicle cabin, and projecting pieces 32 connected to the base piece 31 and disposed at both ends of the base piece 31 in the front-back direction of the vehicle. The projecting pieces 32 are formed of a U-shaped plate curved downward. The base piece 31 is flat, and has a through-hole 33 for a bolt or a screw. The base piece 31 extends upward from the projecting pieces 32.

Each of the mounting components 30 is formed of a flat plate. The pair of projecting pieces 32 are formed by bending the flat plate, and the base piece 31 is formed by uprighting a cut portion of the plate. The mounting component 30 has an opening 34 created when the base piece 31 is formed. The opening 34 is located at the center of the mounting component 30 in the longitudinal direction.
The length L of the projecting pieces 32 in the front-back direction of the vehicle (the length from the edge of the opening 34 to the end of the mounting component 30 in the longitudinal direction) is preferably 10 to 200 mm, and in particular, approximately 30 to 200 mm.

A folded curtain airbag 1 is accommodated inside the projecting pieces 32 and tabs 3 are superposed on the base pieces 31. The tabs 3 each have an opening 3a. The openings 3a are located so as to be coaxial with the through-holes 33 of the base pieces 31.

The folded curtain airbag protrudes downward from the projecting pieces 32. Pieces of tape 15 are wound around the projecting pieces 32 so as to integrate the folded curtain airbag and the mounting components 30.

The curtain airbag 1 is mounted on the roof side rail 2 by screwing bolts or screws in holes 2a (not shown in Figs. 3(a) and 3(b)) of the roof side rail 2 via the openings 3a and the through-holes 33 from the side of the tabs 3.

When the folded curtain airbag 1 is made to move in a direction of an arrow R as a result of striking a B-pillar garnish or the like during mounting, the movement of the folded curtain airbag 1 is blocked by the projecting pieces 32 extending over the upper surface of the folded curtain airbag 1. In particular, even when the folded curtain airbag is pressed upward at a position remote from the base pieces 31, the movement of the folded curtain airbag in the direction of the arrow R in the vicinity of the base piece 31 can be blocked since the length of the projecting pieces 32 in the front-back direction of the vehicle is large.

Also in this embodiment, the projecting pieces 32 extend from the upper surface of the folded curtain airbag 1 to the surface adjacent to the vehicle cabin such that the movement of the folded curtain airbag 1 in the direction of the arrow R can be blocked sufficiently. Moreover, the pieces of tape 15 have high durability since the projecting pieces 32 are curved.

The above-described embodiments are merely examples for carrying out the present invention, and embodiments other than those shown in the drawings are permissible in relation to the shapes of the vehicle body at mounting positions. The fixing means is not limited to bolts or screws, but may be other means such as clips.

## Claims

1. A mounting component for mounting a folded curtain airbag (1) that is made from a flat plate and that extends along a vehicle body on the vehicle body, comprising:
(a) projecting pieces (12; 12A; 32) extending from both ends of a base piece (11; 31) over the folded curtain airbag (1), wherein
(b) the projecting pieces (12; 12A; 32) are bent from the flat plate downwardly and are adapted to accommodate the folded curtain airbag (1) inside the projecting pieces (32), and
(c) the base piece (11; 31) is an upright portion which is a cut portion of the plate creating an opening (34) at the center of the mounting component (10; 30),
(d) the base piece (11; 31) and the projecting pieces (12; 12A; 32) are integrated with each other, and
(e) the base piece (11; 31) is adapted to attach the mounting component (10; 30) and the curtain airbag (1) to the vehicle body.

2. The mounting component according to Claim 1, wherein each of the projecting pieces (12, 12A) comprises a hanging portion at the end thereof extending over a surface of the folded curtain airbag adjacent to a vehicle cabin.

3. The mounting component according to Claim 2, wherein the longitudinal section of the projecting pieces (12A) is concaved in a downward direction.

4. The mounting component according to any one of Claims 1 to 3, wherein the width of the projecting pieces (12, 12A) is 10 mm or more.

5. The mounting component according to any one of Claims 1 to 4, further comprising:
a catching piece (14) engaged with a catching hole (2b) formed in the vehicle body.

6. A mounting structure having a folded curtain airbag that is mounted on a vehicle body using a mounting component according to any one of Claims 1 to 5; wherein
the curtain airbag (1) comprises a tab (3) protruding therefrom and superposed on the base piece (11) of the mounting component (10, 10A, 30); and
the tab (3) is attached to the vehicle body via the base piece (11).

7. The mounting structure according to Claim 6, wherein
the tab (3) is superposed on a surface of the base piece (11) adjacent.to the vehicle cabin, and a retaining piece (20) is superposed on a surface of the tab (3) adjacent to the vehicle cabin; and
the retaining piece (20) and the base piece (11) are integrated with each other.

8. The mounting structure according Claim 6 or 7, wherein
the folded curtain airbag (1) and the mounting component (10, 10A, 30) are integrated with each other by tape members (15) wound around the folded curtain airbag (1) and the mounting component (10, 10A, 30); and
the tape members (15) surround the outer peripheries of the projecting pieces (12, 12A).

9. A curtain airbag module to be for mounted on a vehicle body, said curtain airbag module comprising:
a folded curtain airbag;
a mounting component according to any one of Claims 1 to 5; and
a tab (3) protruding from the curtain airbag (1) and being superposed on the base piece (11) of the mounting component (10, 10A, 30); wherein
the tab (3) is adapted for attachment to the vehicle body via the base piece (11).

10. The curtain airbag module according to Claim 9,
wherein
the tab (3) is superposed on a surface of the base piece (11) adjacent to the vehicle cabin, and a retaining piece (20) is superposed on a surface of the tab (3) adjacent to the vehicle cabin; and
the retaining piece (20) and the base piece (11) are integrated with each other.

11. The curtain airbag module according Claim 9 or 10, wherein
the folded curtain airbag (1) and the mounting component (10, 10A, 30) are integrated with each other by tape members (15) wound around the folded curtain airbag (1) and the mounting component (10, 10A, 30); and
the tape members (15) surround the outer peripheries of the projecting pieces (12, 12A).

## Patentansprüche

1. Befestigungskomponente zum Befestigen eines gefalteten Vorhangairbags (1), die aus einer flachen Platte hergestellt ist und die sich entlang einer Fahrzeugkarosserie erstreckt, an der Fahrzeugkarosserie mit:
(a) Vorsprungstücken (12; 12A; 32), die sich von beiden Enden eines Basisstücks (11; 31) über dem gefalteten Vorhangairbag (1) erstrecken, wobei
(b) die Vorsprungstücke (12; 12A; 32) von der flachen Platte nach unten abgebogen und geeignet sind, den gefalteten Vorhangairbag (1) innerhalb der Vorsprungstücke (32) unterzubringen, und
(c) das Basisstück (11; 31) ein aufrechter Abschnitt ist, der ein ausgeschnittener Abschnitt der Platte ist, so dass eine Öffnung (34) in der Mitte der Befestigungskomponente (10; 30) gebildet wird,
(d) das Basisstück (11; 31) und die Vorsprungstücke (12; 12A; 32) miteinander integriert sind und
(e) das Basisstück (11; 31) geeignet ist, die Befestigungskomponente (10; 30) und den Vorhangairbag (1) an der Fahrzeugkarosserie anzubringen.

2. Befestigungskomponente nach Anspruch 1, wobei jedes der Vorsprungstücke (12, 12A) einen Hängeabschnitt an seinem Ende aufweist, der sich über einer Oberfläche des gefalteten Vorhangairbags benachbart zu einem Fahrzeuginnenraum erstreckt.

3. Befestigungskomponente nach Anspruch 2, wobei der Längsschnitt der Vorsprungstücke (12A) in Abwärtsrichtung konkav ist.

4. Befestigungskomponente nach einem der Ansprüche 1 bis 3, wobei die Breite der Vorsprungstücke (12, 12A) mindestens 10 mm beträgt.

5. Befestigungskomponente nach einem der Ansprüche 1 bis 4, ferner mit:
einem Einraststück (14), das in Eingriff mit einem in der Fahrzeugkarosserie gebildeten Einrastloch (2b) ist.

6. Befestigungsaufbau mit einem gefalteten Vorhangairbag, der an einer Fahrzeugkarosserie mit Hilfe einer Befestigungskomponente nach einem der Ansprüche 1 bis 5 befestigt ist; wobei
der Vorhangairbag (1) eine Lasche (3) aufweist, die von ihm vorsteht und das Basisstück (11) der Befestigungskomponente (10, 10A, 30) überlagert; und
die Lasche (3) über das Basisstück (11) an der Fahrzeugkarosserie angebracht ist.

7. Befestigungsaufbau nach Anspruch 6, wobei die Lasche (3) eine Oberfläche des Basisstücks (11) benachbart zum Fahrzeuginnenraum überlagert und ein Haltestück (20) eine Oberfläche der Lasche (3) benachbart zum Fahrzeuginnenraum überlagert; und
das Haltestück (20) und das Basisstück (11) miteinander integriert sind.

8. Befestigungsaufbau nach Anspruch 6 oder 7, wobei der gefaltete Vorhangairbag (1) und die Befestigungskomponente (10, 10A, 30) durch Bandteile (15) miteinander integriert sind, die um den gefalteten Vorhangairbag (1) und die Befestigungskomponente (10, 10A, 30) gewickelt sind; und
die Bandteile (15) die Außenumfänge der Vorsprungstücke (12, 12A) umgeben.

9. Vorhangairbagmodul, das an einer Fahrzeugkarosserie zu befestigen ist, wobei das Vorhangairbagmodul aufweist:
einen gefalteten Vorhangairbag;
eine Befestigungskomponente nach einem der Ansprüche 1 bis 5; und
eine Lasche (3), die vom Vorhangairbag (1) vorsteht und das Basisstück (11) der Befestigungskomponente (10, 10A, 30) überlagert; wobei
die Lasche (3) zum Anbringen an der Fahrzeugkarosserie über das Basisstück (11) geeignet ist.

10. Vorhangairbagmodul nach Anspruch 9, wobei die Lasche (3) eine Oberfläche des Basisstücks (11) benachbart zum Fahrzeuginnenraum überlagert und ein Haltestück (20) eine Oberfläche der Lasche (3) benachbart zum Fahrzeuginnenraum überlagert; und
das Haltestück (20) und das Basisstück (11) miteinander integriert sind.

11. Vorhangairbagmodul nach Anspruch 9 oder 10, wobei der gefaltete Vorhangairbag (1) und die Befestigungskomponente (10, 10A, 30) durch Bandteile (15) miteinander integriert sind, die um den gefalteten Vorhangairbag (1) und die Befestigungskomponente (10, 10A, 30) gewickelt sind; und
die Bandteile (15) die Außenumfänge der Vorsprungstücke (12, 12A) umgeben.

## Revendications

1. Composant de montage pour le montage d'un coussin de sécurité gonflable en rideau repliél(1) qui est constitué d'une plaque plate et qui s'étend le long d'une carrosserie de véhicule sur la carrosserie du véhicule, comprenant :
(a) des pièces saillantes (12 ; 12A ; 32) s'étendant à partir des deux extrémités d'une pièce de base (11 ; 31) par-dessus le coussin de sécurité gonflable en rideau replié (1) ;
(b) le fait que les pièces saillantes (12 ; 12A ; 32) sont pliées vers le bas à partir de la plaque de base et sont conçues pour que le coussin de sécurité gonflable en rideau replié (1) viennent se loger à l'intérieur des pièces saillantes (32) ; et
(c) la pièce de base (11 ; 31) représente une portion droite, à savoir une portion découpée de la plaque créant une ouverture (34) au centre du composant de montage (10 ; 30) ;
(d) la pièce de base (11 ; 31) et les pièces saillantes (12 ; 12A ; 32) sont intégrées les unes dans les autres ; et
(e) la pièce de base (11 ; 31) est conçue pour fixer le composant de montage (10 ; 30) et le coussin de sécurité gonflable en rideau (1) à la carrosserie du véhicule.

2. Composant de montage selon la revendication 1, dans lequel chacune des pièces saillantes (12, 12A) comprend une portion suspendue à son extrémité s'étendant par-dessus une surface du coussin de sécurité gonflable en rideau replié en position adjacente à l'habitacle d'un véhicule.

3. Composant de montage selon la revendication 2, dans lequel la section longitudinale des pièces saillantes (12A) est concave dans une direction s'étendant vers le bas.

4. Composant de montage selon l'une quelconque des revendications 1 à 3, dans lequel la largeur des pièces saillantes (12, 12A) s'élève à 10 mm ou plus.

5. Composant de montage selon l'une quelconque des revendications 1 à 4, comprenant en outre :
une pièce de saisie (14) insérée dans un trou de saisie (2b) pratiqué dans la carrosserie du véhicule.

6. Structure de montage possédant un coussin de sécurité gonflable en rideau replié qui est monté sur une carrosserie de véhicule en utilisant un composant de montage selon l'une quelconque des revendications 1 à 5, dans laquelle :
le coussin de sécurité gonflable en rideau (1) comprend une languette (3) faisant saillie par rapport audit coussin et qui vient se superposer à la pièce de base (11) du composant de montage (10, 10A, 30) ; et
la languette (3) est fixée à la carrosserie du véhicule via la pièce de base (11).

7. Structure de montage selon la revendication 6, dans laquelle :
la languette (3) vient se superposer à une surface de la pièce de base (11) en position adjacente à l'habitacle du véhicule, et une pièce de retenue (20) vient se superposer à une surface de la languette (3) en position adjacente à l'habitacle du véhicule ; et
la pièce de retenue (20) et la pièce de base (11) sont intégrées l'une dans l'autre.

8. Structure de montage selon la revendication 6 ou 7, dans laquelle :
le coussin de sécurité gonflable en rideau replié (1) et le composant de montage (10, 10A, 30) sont intégrés l'un dans l'autre via des membres (15) en forme de rubans adhésifs qui viennent s'enrouler autour du coussin de sécurité gonflable en rideau replié (1) et autour du composant de montage (10, 10A, 30) ; et
les membres (15) en forme de rubans adhésifs entourent les périphéries externes des pièces saillantes (12, 12A).

9. Module de coussin gonflable de sécurité en rideau à monter sur la carrosserie d'un véhicule, ledit module de coussin de sécurité gonflable en rideau comprenant :
un coussin de sécurité gonflable en rideau replié ;
un composant de montage selon l'une quelconque des revendications 1 à 5 ; et
une languette (3) faisant saillie par rapport au coussin de sécurité gonflable en rideau (1) et qui vient se superposer à la pièce de base (11) du composant de montage (10, 10A, 30) ; dans lequel
la languette (3) est conçue pour venir se fixer à la carrosserie du véhicule via la pièce de base (11).

10. Module de coussin gonflable de sécurité en rideau selon la revendication 9, dans lequel :
la languette (3) vient se superposer à une surface de la pièce de base (11) en position adjacente à l'habitacle du véhicule, et une pièce de retenue (20) vient se superposer à une surface de la languette (3) en position adjacente à l'habitacle du véhicule ; et
la pièce de retenue (20) et la pièce de base (11) sont intégrées l'une dans l'autre.

11. Module de coussin gonflable de sécurité en rideau selon la revendication 9 ou 10, dans lequel :
le coussin de sécurité gonflable en rideau replié (1) et le composant de montage (10, 10A, 30) sont intégrés l'un dans l'autre via des membres (15) en forme de rubans adhésifs qui viennent s'enrouler autour du coussin de sécurité gonflable en rideau replié (1) et autour du composant de montage (10, 10A, 30) ; et
les membres (15) en forme de rubans adhésifs entourent les périphéries externes des pièces saillantes (12, 12A).
